# EUROPÄISCHE PATENTSCHRIFT

(11) **EP 2 604 816 B1**
(45) Veröffentlichungstag und Bekanntmachung des Hinweises auf die Patenterteilung: **15.02.2017**
(21) Anmeldenummer: 12196537.0
(22) Anmeldetag: 11.12.2012
(51) Int. Cl.: F01L 1/047, F16F 15/26

(54) **Welle-/Lageranordnung**
shaft/ bearing arrangement
ensemble arbre - palliers

(30) Priorität: 14.12.2011 DE 102011088603
(43) Veröffentlichungstag der Anmeldung: 19.06.2013
(73) Patentinhaber: MAHLE International GmbH, 70376 Stuttgart (DE)
(72) Erfinder: Flender, Thomas, 71735 Eberdingen (DE); Menonna, Antonio, 71254 Ditzingen (DE); Schneider, Falk, 70825 Korntal-Münchingen (DE); Steichele, Stefan, 70839 Gerlingen (DE)
(74) Vertreter: BRP Renaud & Partner mbB Rechtsanwälte Patentanwälte Steuerberater

(56) Entgegenhaltungen:
- EP-A1- 2 189 549
- DE-A1-102007 024 092
- DE-A1-102007 037 287
- DE-A1-102008 026 204

## Beschreibung

Die vorliegende Erfindung betrifft eine Welle-/Lageranordnung mit einer Welle mit darauf angeordneten Funktionselementen und zumindest einer Lagerstelle zur radialen Tunnellagerung der Welle. Die Erfindung betrifft außerdem eine Welle für eine derartige Welle-/Lageranordnung.

Aus der DE 10 2007 024 092 A1 ist eine Nockenwelle für Verbrennungsmotoren von Kraftfahrzeugen bekannt, die über zumindest ein Rollenlager an einem Zylinderkopfgehäuse gelagert ist. Zusätzlich vorgesehen ist zumindest ein Axiallager, das die Nockenwelle in Axialrichtung lagert und das als Kugel- oder ebenfalls als Rollenlager ausgebildet ist. Hierdurch soll eine besonders leichtgängige Lagerung der Nockenwelle erreicht werden.

Aus der DE 10 2010 005 874 A1 ist eine Nockenwelle mit Wälzlagern bekannt, wobei die Wälzlager jeweils zumindest eine Wälzlagereinlage und einen Wälzlageraußenring umfassen. Am Wälzlageraußenring ist am Außenumfang ein Fixierelement vorgesehen, das geeignet ist, das Wälzlager in einer Lageraufnahme eines Kraftfahrzeug-Zylinderkopfes zu fixieren. Ferner wird eine Montageanordnung für ein Wälzlager zur Anordnung auf einer durch Innenhochdruck umformbaren Nockenwelle beschrieben.

Nockenwellen wurden bisher oftmals in einer Tunnellagerung, das heißt in geschlossenen Lagerstellen/Lagerböcken, eines Zylinderkopfes gelagert, wobei zur leichten Lagerung der Nockenwelle üblicherweise ein Wälzlager im jeweiligen Lagerbock fixiert war. Um ein Einfahren der zuvor fertig montierten Nockenwelle in die einzelnen Lagerstellen zu ermöglichen, musste ein Trägerring, über welchen die Nockenwelle später über das zugehörige Wälzlager am Lagerbock gelagert wurde, hinsichtlich seines maximalen Durchmessers auf jeden Fall größer als sämtliche Funktionselemente auf der Nockenwelle, bspw. Nocken, sein. Wären die Nocken radial größer als der Trägerring gewesen, so wäre ein Einstecken der Nockenwelle in die einzelnen Lagerstellen/Lagerböcke nicht möglich. Durch den daraus resultierenden großen Durchmesser des Trägerrings wurde in diesem Bereich jedoch viel Material benötigt, wodurch die Nockenwelle verhältnismäßig schwer war. Außerdem war ein beträchtlicher Bauraum vorzuhalten.

Die vorliegende Erfindung beschäftigt sich daher mit dem Problem, für eine Welle-/Lageranordnung eine verbesserte Ausführungsform anzugeben, die sich insbesondere durch eine kompakte und gewichtsoptimierte Konstruktion auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, das bisher in den jeweiligen Lagerstellen/Lagerböcken fixierte Wälzlager zur Lagerung einer Welle, bspw. zur Lagerung einer Nocken- oder einer Ausgleichswelle, nunmehr zu teilen und einen die Wälzkörper des Wälzlagers aufnehmenden Wälzkörperkäfig auf einem Trägerring an der Welle zu befestigen und lediglich einen Außenring noch in der Lagerstellen bzw. im Zylinderkopf selbst zu fixieren. Die maximale Radialerstreckung des Trägerrings samt darauf fixiertem Wälzkörperkäfig muss dabei nach wie vor größer sein als die maximale Radialerstreckung sämtlicher auf der Welle aufgefädelter Funktionselemente, bspw. Nocken oder Ausgleichsgewichte, wobei der Trägerring nunmehr um die radiale Dicke des Wälzlagerkäfigs hinsichtlich seines Radius reduziert werden kann und dennoch durch die jeweiligen Lagerstellen/Lagerböcke passt. Eine Radialerstreckung des Trägerrings ist dabei erfindungsgemäß kleiner als die größte Radialerstreckung eines der Funktionselemente. Demzufolge ist es bei der erfindungsgemäßen Wellen-/Lageranordnung denkbar, einen Trägerring auf der Welle zu montieren, dessen Außendurchmesser/Radialerstreckung zumindest geringfügig kleiner ist als die maximale Radialerstreckung eines benachbarten Funktionselements, bspw. eines Nockens, wobei die Radialerstreckung des Trägerrings zusammen mit dem darauf montierten Wälzkörperkäfig größer ist als die maximale Radialerstreckung des Funktionselementes, das heißt bspw. des Nockens, sodass die Welle problemlos durch die zugehörigen Lagerstellen/Lagerböcke geführt werden kann, da diese hinsichtlich ihres Innendurchmessers nun um den Wälzkörperkäfig vergrößert sind, da dieser ja auf den Trägerring der Welle fixiert ist. Durch die Reduzierung des Durchmessers des auf der Welle angeordneten Trägerrings kann dessen Gewicht und damit das Gesamtgewicht der Welle bzw. der Welle-/Lageranordnung reduziert werden. Die erfindungsgemäße Lösung bedeutet dabei eine komplette Umkehr von der bisher in diesem Bereich angewandten Denkweise, da nunmehr das Wälzlager nicht mehr komplett im Lagerbock vormontiert, sondern aufgeteilt wird und zwar einerseits auf den weiterhin im Lagerbock befestigten Außenring und andererseits auf den auf dem Trägerring der Welle fixierten Wälzkörperkäfig. Hierdurch lässt sich der Trägerring verkleinern und damit die Welle hinsichtlich ihres Gewichts reduzieren.

Zweckmäßig sind die Welle als Nockenwelle oder als Ausgleichswelle und die Funktionselemente als Nocken oder als Ausgleichsgewichte ausgebildet. Bereits diese Aufzählung, die in keinem Fall abschließend ist, lässt erahnen, wie vielfältig die Anwendung der erfindungsgemäßen Welle-/Lageranordnung ist, so dass diese nicht nur im Rahmen von Nockenwellen bzw. Ausgleichswellen bei Verbrennungsmotoren eingesetzt werden können, sondern generell für sämtliche denkbaren tunnelgelagerten Wellen.

Bei einer weiteren vorteilhaften Ausführungsform der erfindungsgemäßen Lösung ist der Wälzkörperkäfig über Fixierelemente auf dem Trägerring fixiert. Die Fixierelemente können dabei Bestandteil des Trägerrings oder aber des Wälzkörperkäfigs sein, wobei in letzterem Fall die Fixierelemente bspw. als einfache, umbiegbaren Laschen ausgestaltet sein können. Besteht der Wälzkörperkäfig aus Kunststoff, so können die Fixierelemente kostengünstig angespritzt werden. Sind die Fixierelemente bspw. Bestandteil des Trägerrings, so können diese über eine Umformung des Trägerrings, bspw. über eine entsprechende randseitige Bördelung, hergestellt sein. Der Trägerring an sich ist üblicherweise fest, bspw. mittels eines thermischen Fügesitzes, auf einem Rohr der Nockenwelle bzw. der Welle allgemein fixiert oder alternativ einstückig mit der Welle ausgebildet. Alternativ können selbstverständlich die Fixierelemente auch als separate Fixierringe ausgebildet sein, die mit der Welle verpresst oder ebenfalls über einen thermischen Fügesitz verbunden sind. Auch ist die Ausbildung der Fixierelemente als separate Abstandsringe denkbar, die den Trägerring und/oder den Wälzkörperkäfig gegenüber den Funktionselementen, bspw. über benachbarten Nocken fixieren. Sämtliche der aufgezählten Ausführungsformen ermöglichen dabei zumindest ein Vorpositionieren des Wälzkörperkäfigs bzw. des Trägerrings, wobei die endgültige Fixierung bspw. über die am Wälzkörperkäfig angeordneten und umbiegbaren seitlichen Laschen erfolgen kann. Neben derartigen Fixierelementen ist auch das Anbringen einer entsprechenden in Umfangsrichtung verlaufenden Nut am Trägerring bzw. im Bereich eines Ausgleichsgewichts denkbar, wobei dann der zugehörige Wälzkörperkäfig in die Nut des Trägerrings bzw. des Ausgleichsgewichts eingesetzt und dadurch in Axialrichtung fixiert ist. Hierbei bildet die Nut die eigentlichen Fixierelemente.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die DE 10 2008 026 204 A1 zeigt eine Welle-/Lageranordnung gemäß dem Oberbegriff des Anspruchs 1.

Bevorzugte Ausführungsbeispiele der Erfindung sind in den Zeichnungen dargestellt und werden in der nachfolgenden Beschreibung näher erläutert. Dabei zeigen, jeweils schematisch,
- Fig. 1: eine Welle-/Lageranordnung mit einer tunnelgelagerten Nockenwelle gemäß dem Stand der Technik,
- Fig. 2: eine Darstellung wie in Fig. 1, jedoch bei einer erfindungsgemäßen Welle-/Lageranordnung,
- Fig. 3: eine Ansicht und eine Schnittdarstellung durch eine als Ausgleichswelle ausgebildete Welle einer erfindungsgemäßen Welle-/Lageranordnung,
- Fig. 4: eine zugehörige und als Ausgleichswelle ausgebildete erfindungsgemäße Welle,
- Fig. 5: eine Darstellung wie in Fig. 4, jedoch bei montiertem Wälzkörperkäfig,
- Fig. 6: eine Schnittdarstellung sowie eine Ansicht auf eine erfindungsgemäße Welle-/Lageranordnung bei einer Ausgleichswelle und vor der eigentlichen Montage, das heißt vor einem Einschieben des Wälzkörperkäfigs in einen Außenring des zugehörigen Wälzlagers,
- Fig. 7: eine Darstellung wie in Fig. 6, jedoch kurz vor dem Einschieben des Wälzkörperkäfigs in den Außenring des zugehörigen Wälzlagers,
- Fig. 8: eine Darstellung wie in Fig. 6 oder 7, jedoch bei einer Nockenwelle,
- Fig. 9a-d: Schnittdarstellungen durch unterschiedliche mögliche Ausführungsformen erfindungsgemäßer Wellen-/Lageranordnung.

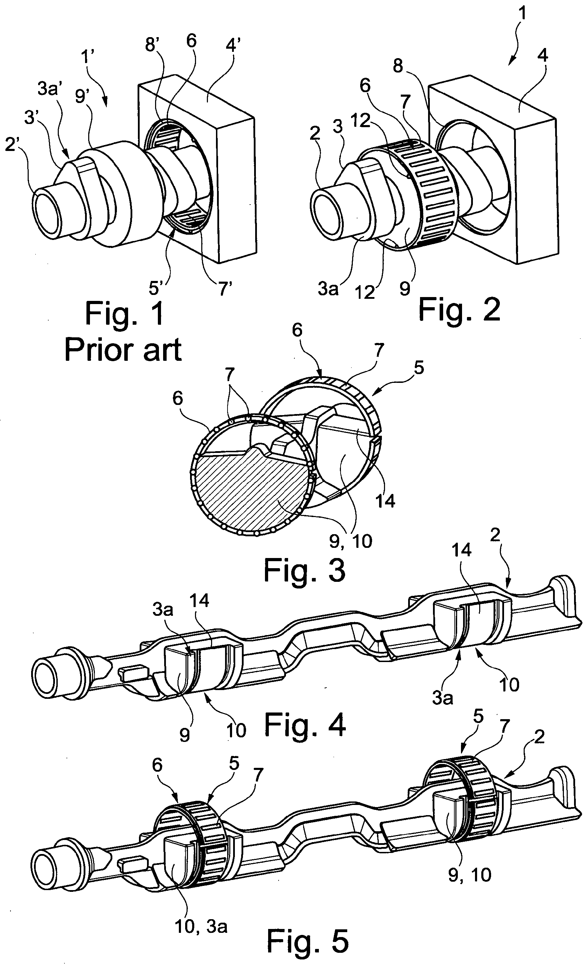

Entsprechend der Fig. 1, weist eine bisher bekannte Welle-/Lageranordnung 1' eine Welle 2' mit darauf angeordneten Funktionselementen 3a', hier Nocken 3' auf, sowie zumindest eine Lagerstelle/Lagerbock 4' zur radialen Tunnellagerung der Welle 2'. Zwischen der Welle 2' und dem Lagerbock 4' ist dabei zumindest ein Wälzlager 5' mit Wälzkörpern 6', bspw. Kugeln, Rollen oder Nadeln, angeordnet, das zumindest einen diesen Wälzkörper 6' aufnehmenden Wälzkörperkäfig 7' und einen Außenring 8' umfasst. Der Begriff "Lagerstelle" wird hierbei gleichbedeutend mit dem Begriff "Lagerbock" verwendet. Das gesamte Wälzlager 5', das heißt sowohl der Wälzkörperkäfig 6' als auch der Außenring 8' sind dabei im Lagerbock 4' angeordnet. Zum Einschieben der Welle 2' in den Lagerbock 4' ist es deshalb erforderlich, dass die Nocken 3' eine maximale Radialerstreckung aufweisen, die kleiner ist als ein Innendurchmesser des Wälzlagers 5', so dass die Welle 2' ohne anzustoßen in den Lagerbock 4' eingeschoben und ein Trägerring 9' zur Erfüllung der eigentlichen Lagerfunktion mit den Wälzkörpern 7' in Kontakt gebracht werden kann. Der Trägerring 9' muss deshalb eine maximale Radialerstreckung aufweisen, die größer ist als eine maximale Radialerstreckung eines jeden Nockens 3', so dass die Durchgangsöffnung im Lagerbock 4' auf jeden Fall so groß ist, dass die Nocken 3' ohne Anstoßen hindurch geschoben werden können. Generell bedingt diese Lagerlösung jedoch einen vergleichsweise großen Trägerring 9', der wiederum viel Material erfordert und dadurch eine vergleichsweise schwere Welle 2' bedeutet.

Erfindungsgemäß wird deshalb bei einer unter die Erfindung fallenden Welle-/Lageranordnung 1 der Wälzkörperkäfig 6 nicht zusammen mit dem Außenring 8 im Lagerbock 4, sondern separat dazu und einzeln auf den Trägerring 9 der Welle 2 fixiert, wogegen der Außenring 8 nach wie vor im Lagerbock 4 fixiert wird, bspw. mittels eines thermischen Fügesitzes (Schrumpfsitzes) oder mittels einer Verpressung. Um dennoch ein anstoßfreies Durchschieben der Funktionselemente 3a und damit der Welle 2 durch den Lagerbock 4 ermöglichen zu können, muss der Trägerring 9 samt darauf fixiertem Wälzkörperkäfig 6 die größte Radialerstreckung der Welle 2 bilden, das heißt insbesondere eine größere Radialerstreckung aufweisen als die benachbarten Nocken 3. Bei der erfindungsgemäßen Welle-/Lageranordnung 1 wird somit ein Teil des Trägerrings 9 durch den Wälzkörperkäfig 6 ersetzt, wodurch der Trägerring 9 insgesamt kleiner und damit leichter ausgebildet werden kann. Im Vergleich zu bisher aus dem Stand der Technik bekannten Welle-/Lageranordnungen 1' (vgl. Fig. 1) besitzt die erfindungsgemäße Welle-/Lageranordnung 1 eine kompaktere Bauweise sowie ein deutlich reduziertes Gewicht und zudem eine deutlich verbesserte Austauschbarkeit.

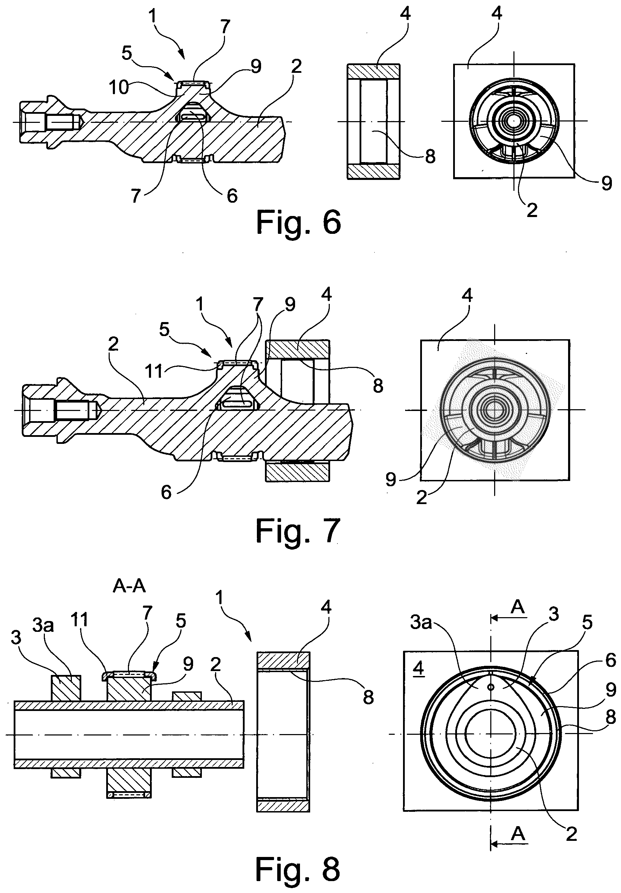

Die Welle 2 kann bspw. als Nockenwelle ausgebildet sein, wie dies insbesondere in den Fig. 2 und 8 dargestellt ist, oder aber aus Ausgleichswelle, wie dies bspw. gemäß den Fig. 3 bis 7 dargestellt ist. Die Welle 2 kann insbesondere als gebaute Nockenwelle oder als geschmiedete Nockenwelle oder als gegossene Nockenwelle ausgebildet sein. Im ersten Fall sind die Funktionselemente 3a dabei als Nocken 3 ausgebildet, wogegen sie im zweiten Fall üblicherweise aus Ausgleichsgewichte 10 ausgebildet sind. Wie den Fig. 2, 6 und 7 zu entnehmen ist, ist die Lagerstelle 4 üblicherweise als geschlossener Lagerbock ausgebildet und in einen nicht dargestellten Zylinderkopf integriert, wodurch die Welle 2 durch ein seitliches Einschieben montiert werden muss.

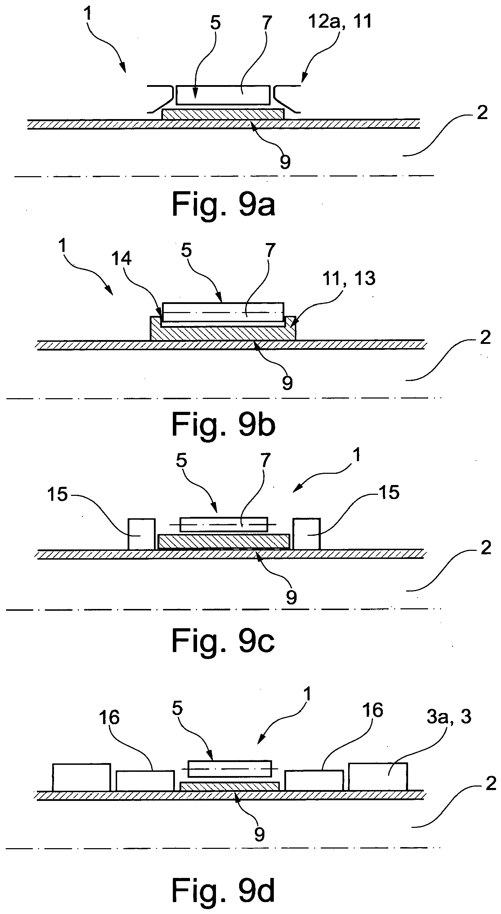

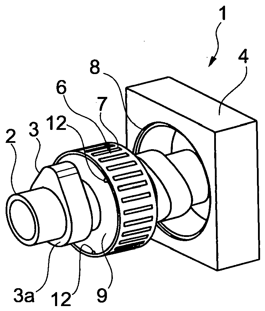

Eine Fixierung des Trägerrings 9 auf der Welle 2 kann bspw. über ebenfalls einen Presssitz oder aber einen thermischen Fügesitz, bspw. einen Schrumpfsitz erfolgen. Denkbar ist auch eine einteilige oder einstückige Ausbildung des Trägerrings 9 mit der Welle 2. Eine Fixierung des Wälzkörperkäfigs 6 auf dem Trägerring 9 hingegen erfolgt üblicherweise über Fixierelemente 11, die bspw. in der Art von Laschen 12 ausgebildet sind, und die, wie dies gemäß der Fig. 2 dargestellt ist, durch ein Umbiegen seitlich am Trägerring 9 fixiert werden. Generell ist auch denkbar, dass wie in der Fig. 9a gezeigt ist, am Wälzkörperkäfig 6 seitliche Clippselemente 12a vorgesehen sind, die die Funktion der Fixierelemente 11 übernehmen und den Wälzkörperkäfig 6 am Trägerring 9 fixieren. Betrachtet man die Fig. 9b, so kann man erkennen, dass eine seitliche Fixierung des Wälzkörperkäfigs 6 auch mittels einer seitlichen Aufbördelung 13 des Trägerrings 9 erfolgen kann, wobei in diesem Fall der Trägerring 9 eine Nut 14 aufweist, in welcher der Wälzkörperkäfig 6 und damit auch die Wälzkörper 7 angeordnet sind. Die seitliche Aufbördelung bildet somit die Ränder der Nut 14 und verhindert ein axiales Verschieben des Wälzkörperkäfigs 6. In Fig. 9c ist eine weitere alternative Ausführungsform der erfindungsgemäßen Lösung gezeigt, bei welcher die Fixierelemente 11 als separate Fixierringe 15 ausgebildet sind, die ihrerseits fest mit der Welle 2 verbunden sind und dadurch sowohl die Wälzkörper 7 als auch den Wälzkörperkäfig 6 auf den Trägerring 9 fixieren. Eine Fixierung kann beispielsweise über einen Schrumpfsitz erfolgen. Alternativ hierzu können die Fixierringe 15, das heißt respektive die Fixierelemente 11 auch als Abstandsringe 16 ausgebildet sein, wie dies bspw. gemäß der Fig. 9d gezeigt ist, wobei in diesem Fall der Wälzkörperkäfig 6 über die Abstandsringe 16 gegenüber benachbarten Funktionselementen 3a, bspw. gegenüber benachbarten Nocken 3, in Position gehalten wird. Sämtlichen Ausführungsformen der Fig. 9a bis 9d ist dabei gemein, dass die Fixierelemente 11 einer Vorpositionierung und einer Fixierung der Wälzkörperkäfige 6 beim Einschieben der Welle 2 in die jeweiligen Lagerböcke 4 dienen.

Eine Nut 14 als Fixierung für den Wälzkörperkäfig 6 ist bspw. auch der Welle 2 gemäß den Fig. 3 bis 5 zu entnehmen, wobei hier die Nut 14 im Bereich der Ausgleichgewichte 10 angeordnet ist.

Entsprechend der Fig. 3 ist im Vordergrund eine Schnittdarstellung durch einen Wälzkörperkäfig 6 im Bereich des Ausgleichsgewichts 10 und schräg dahinter eine Ansicht auf dieselbe Stelle dargestellt. Deutlich erkennbar wiederum ist, dass der Wälzkörperkäfig 6 tief in die Nut 14 am Ausgleichsgewicht 10 eingelassen ist und zwar vorzugsweise so tief, dass vorzugsweise lediglich die Wälzkörper 7 radial aus der Nut 14 herausschauen und dadurch die Lagerung am Außenring 8 ermöglichen.

Betrachtet man die Fig. 8 genauer, so kann man erkennen, dass eine maximale Radialerstreckung (Durchmesser) des Trägerrings 9 kleiner ist als eine größte Radialerstreckung eines Funktionselements 3a, bspw. eines Nockens 3, wogegen die maximale Radialerstreckung (Durchmesser) des Trägerrings 9 zusammen mit dem Wälzkörperkäfig 6 größer ist als die Radialerstreckung des Nockens 3, so dass die Welle 2, hier die Nockenwelle, vergleichsweise einfach in den Lagerbock 4 eingeschoben werden kann, ohne dass dabei befürchtet werden muss, dass die Welle 2 mit den Nocken 3 anstößt, da diese radial kleiner sind als die benachbarten Trägerringe 9 samt Wälzkörperkäfig 6. Insgesamt vereinfacht sich dadurch die Montage erheblich und zudem kann eine Reduzierung des Trägerrings 9 hinsichtlich seiner radialen Abmessungen erreicht werden, wodurch dieser gewichtsreduziert ausgebildet werden kann. Eine derartige Gewichtsreduzierung wirkt sich langfristig auf einen Kraftstoffverbrauch und ein Emissionsvolumen aus, sofern die Welle 2 bspw. in einem Verbrennungsmotor eines Kraftfahrzeugs zur Anwendung kommt.

Bei der erfindungsgemäßen Welle-/Lageranordnung 1 ist es zum Einschieben der Welle 2 in die Lagerstelle 4 bzw. in den Lagerbock 4 erforderlich, dass der Wälzkörperkäfig 6 auf dem zugehörigen Trägerring 9 zumindest in Axialrichtung fixiert ist, wobei die Trägerringe 9 bei als Ausgleichswellen ausgebildeten Wellen 2 selbst Ausgleichsgewichte 10 darstellen können.

## Patentansprüche

1. Welle-/Lageranordnung (1) mit einer Welle (2) mit darauf angeordneten Funktionselementen (3a) und zumindest einer Lagerstelle (4), insbesondere einem Lagerbock, zur radialen Tunnellagerung der Welle (2), wobei
- zwischen der Welle (2) und der Lagerstelle (4) zumindest ein Wälzlager (5) mit Wälzkörpern (7) angeordnet ist, das zumindest einen die Wälzkörper (7) aufnehmenden Wälzkörperkäfig (6) und einen Außenring (8) aufweist,
- der Wälzkörperkäfig (6) direkt oder indirekt über einen Trägerring (9) auf der Welle (2) fixiert ist, wogegen der Außenring (8) in der Lagerstelle (4) fixiert ist,
- der Trägerring (9) samt darauf fixiertem Wälzkörperkäfig (6) eine größere Radialerstreckung aufweist, als die Funktionselemente (3a),
- eine Radialerstreckung des Trägerrings (9) kleiner ist als die größte Radialerstreckung eines der Funktionselemente (3a),
**dadurch gekennzeichnet,**
- **dass** der Wälzkörperkäfig (6) über Fixierelemente (11) auf dem Trägerring (9) fixiert ist,
- **dass** die Fixierelemente (11) in der Art von Laschen (12) ausgebildet sind,
oder
- **dass** am Wälzkörperkäfig (6) seitliche Clippselemente (12a) vorgesehen sind.

2. Welle-/Lageranordnung nach Anspruch 1,
**dadurch gekennzeichnet,**
**dass** die Welle (2) als Nockenwelle und die Funktionselemente (3a) als Nocken (3) ausgebildet sind.

3. Welle-/Lageranordnung nach Anspruch 2,
**dadurch gekennzeichnet,**
**dass** die Welle (2) als gebaute Nockenwelle oder als geschmiedete Nockenwelle oder als gegossene Nockenwelle ausgebildet ist.

4. Welle-/Lageranordnung nach Anspruch 1,
**dadurch gekennzeichnet,**
**dass** die Welle (2) als Ausgleichswelle und die Funktionselemente (3a) als Ausgleichsgewichte (10) ausgebildet sind.

5. Welle-/Lageranordnung nach einem der Ansprüche 1 bis 4,
**dadurch gekennzeichnet,**
**dass** die Lagerstelle (4) als geschlossener Lagerbock ausgebildet ist.

6. Welle-/Lageranordnung nach einem der Ansprüche 1 bis 5,
**dadurch gekennzeichnet,**
**dass** der Außenring (8) über einen thermischen Fügesitz im Lagerbock (4) fixiert ist.

7. Welle-/Lageranordnung nach einem der Ansprüche 1 bis 4,
**dadurch gekennzeichnet,**
- **dass** der Trägerring (9) über einen thermischen Fügesitz auf der Welle (2) fixiert ist, oder
- **dass** der Trägerring (9) einstückig mit der Welle (2) ausgebildet ist.

8. Welle-/Lageranordnung nach einem der Ansprüche 1 bis 7,
**dadurch gekennzeichnet,**
**dass** die Wälzkörper (7) als Nadeln, Rollen oder Kugeln ausgebildet sind.

9. Welle (2), insbesondere eine Nockenwelle oder eine Ausgleichswelle, mit zumindest einer Welle-/Lageranordnung (1) nach einem der Ansprüche 1 bis 8.

## Claims

1. Shaft/bearing arrangement (1) with a shaft (2) with function elements (3a) arranged thereon and at least one bearing point (4), in particular a bearing block, for radial tunnel bearing of the shaft (2), wherein:
- between the shaft (2) and the bearing point (4), at least one roller bearing (5) with bearing bodies (7) is arranged which comprises at least one roller body cage (6) receiving the roller bodies (7) and an outer ring (8),
- the roller body cage (6) is fixed directly or indirectly via a carrier ring (9) on the shaft (2), whereas the outer ring (8) is fixed in the bearing point (4),
- the carrier ring (9) and roller body cage (6) fixed thereon has a greater radial extension than the function elements (3a),
- a radial extension of the carrier ring (9) is smaller than the largest radial extension of one of the function elements (3a),
**characterised in that**
- the roller body cage (6) is fixed to the carrier ring (9) via fixing elements (11),
- the fixing elements (11) are configured in the manner of tabs (12), or
- lateral clip elements (12a) are provided on the roller body cage (6).

2. Shaft/bearing arrangement according to claim 1, **characterised in that** the shaft (2) is formed as a camshaft and the function elements (3a) are formed as cams (3).

3. Shaft/bearing arrangement according to claim 2, **characterised in that** the shaft (2) is formed as an assembled camshaft or as a forged camshaft or as a cast camshaft.

4. Shaft/bearing arrangement according to claim 1, **characterised in that** the shaft (2) is formed as a balancer shaft and the function elements (3a) as balancer weights (10).

5. Shaft/bearing arrangement according to any of claims 1 to 4, **characterised in that** the bearing point (4) is formed as a closed bearing block.

6. Shaft/bearing arrangement according to any of claims 1 to 5, **characterised in that** the outer ring (8) is fixed in the bearing block (4) via a thermal joint seat.

7. Shaft/bearing arrangement according to any of claims 1 to 4, **characterised in that**
- the carrier ring (9) is fixed to the shaft (2) via a thermal joint seat, or
- that the carrier ring (9) is formed integrally with the shaft (2).

8. Shaft/bearing arrangement according to any of claims 1 to 7, **characterised in that** the roller bodies (7) are formed as needles, rollers or balls.

9. Shaft (2), in particular a camshaft or a balancer shaft, with at least one shaft/bearing arrangement (1) according to any of claims 1 to 8

## Revendications

1. Ensemble arbre-palier (1) comprenant un arbre (2), sur lequel sont disposés des éléments fonctionnels (3a), et au moins un emplacement formant palier (4), en particulier un support, servant au support radial en tunnel de l'arbre (2), dans lequel
- au moins un palier à roulement (5) avec des corps de roulement (7) est disposé entre l'arbre (2) et l'emplacement formant palier (4), lequel palier de roulement présente au moins une cage de corps de roulement (6) logeant les corps de palier (7) et une bague extérieure (8),
- la cage de corps de roulement (6) est fixée directement ou indirectement, par l'intermédiaire d'une bague porteuse (9), sur l'arbre (2), tandis que la bague extérieure (8) est fixée dans l'emplacement formant palier (4),
- la bague porteuse (9) y compris la cage de corps de roulement (6) qui est fixée sur cette dernière présente une extension radiale plus grande que les éléments fonctionnels (3a),
- une extension radiale de la bague porteuse (9) est plus petite que l'extension radiale la plus grande d'un des éléments fonctionnels (3a),
**caractérisé en ce**
- **que** la cage de corps de roulement (6) est fixée, par l'intermédiaire d'éléments de fixation (11), sur la bague porteuse (9),
- **que** les éléments de fixation (11) sont réalisés à la manière de brides (12), ou
- **que** des éléments à pince (12a) latéraux sont prévus au niveau de la cage de corps de roulement (6).

2. Ensemble arbre-palier selon la revendication 1,
**caractérisé en ce**
**que** l'arbre (2) est réalisé sous la forme d'un arbre à cames et les éléments fonctionnels (3a) sont réalisés sous la forme de cames (3).

3. Ensemble arbre-palier selon la revendication 2,
**caractérisé en ce**
**que** l'arbre (2) est réalisé sous la forme d'un arbre à cames monté ou sous la forme d'un arbre à cames forgé ou sous la forme d'un arbre à cames coulé.

4. Ensemble arbre-palier selon la revendication 1,
**caractérisé en ce**
**que** l'arbre (2) est réalisé sous la forme d'un arbre d'équilibrage et les éléments fonctionnels (3a) sont réalisés sous la forme de poids d'équilibrage (10).

5. Ensemble arbre-palier selon l'une quelconque des revendications 1 à 4,
**caractérisé en ce**
**que** l'emplacement formant palier (4) est réalisé sous la forme d'un support fermé.

6. Ensemble arbre-palier selon l'une quelconque des revendications 1 à 5, **caractérisé en ce**
**que** la bague extérieure (8) est fixée dans le support (4) par l'intermédiaire d'un siège d'assemblage thermique.

7. Ensemble arbre-palier selon l'une quelconque des revendications 1 à 4,
**caractérisé en ce**
- **que** la bague porteuse (9) est fixée sur l'arbre (2) par l'intermédiaire d'un siège d'assemblage thermique, ou
- **que** la bague porteuse (9) est réalisée d'un seul tenant avec l'arbre (2).

8. Ensemble arbre-palier selon l'une quelconque des revendications 1 à 7,
**caractérisé en ce**
**que** les corps de roulement (7) sont réalisés sous la forme d'aiguilles, de rouleaux ou de billes.

9. Arbre (2), en particulier arbre à cames ou arbre d'équilibrage, comprenant au moins un ensemble arbre-palier (1) selon l'une quelconque des revendications 1 à 8.
